# EUROPEAN PATENT APPLICATION

(11) **EP 3 686 816 A1**
(43) Date of publication of application: **29.07.2020**
(21) Application number: 20151200.1
(22) Date of filing: 10.01.2020
(51) Int. Cl.: G06N 3/08, G06N 3/04

(54) **TECHNIQUES FOR REMOVING MASKS FROM PRUNED NEURAL NETWORKS**

(30) Priority: 22.01.2019 US 201916254563
(71) Applicant: Nvidia Corporation, Santa Clara, CA 95050 (US)
(72) Inventor: FAGERHOLM, Edvard Olav Valter, Santa Clara,, CA, 95050 (US); JÄNIS, Pekka, Santa Clara,, CA, 95050 (US)
(74) Representative: Kraus & Weisert Patentanwälte PartGmbB

(57) **Abstract**

A demasking engine removes masks from a pruned neural network that is represented by a graph of nodes. The demasking engine analyzes a tensor and a mask associated with a given node in the graph of nodes to determine portions of the tensor that are zeroed by the mask. The demasking engine then removes these portions from the tensor to generate a densified tensor that has a smaller dimensionality than the original tensor. A function associated with the node can be evaluated more quickly based on the densified tensor than the original tensor. The demasking engine adds a scatter operation subsequent to the node in order to scale the dimensionality of the densified tensor to the dimensionality associated with the original tensor.

## Description

### BACKGROUND

A "tensor" is a mathematical construct commonly used in Linear Algebra applications such as Machine Learning and Artificial Intelligence. Scalars, vectors, and matrices are examples of tensors. A neural network typically includes one or more tensors that are processed during execution of the neural network to perform one or more operations. The values of a given tensor included in the neural network are modified via a training process to cause the current output(s) of the neural network to approach target output(s). When training is complete, some or all tensors included in the neural network can be quite large in size. The operations associated with a large tensor typically cannot be performed quickly. Consequently, conventional neural networks are usually ill-suited for use in real-time, low-latency applications, such as autonomous vehicle control, among others.

### BRIEF DESCRIPTION OF THE DRAWINGS

So that the manner in which the above recited features of the various embodiments can be understood in detail, a more particular description of the inventive concepts, briefly summarized above, may be had by reference to various embodiments, some of which are illustrated in the appended drawings. It is to be noted, however, that the appended drawings illustrate only typical embodiments of the inventive concepts and are therefore not to be considered limiting of scope in any way, and that there are other equally effective embodiments.
Figure 1 illustrates a system configured to implement one or more aspects of the various embodiments.
Figure 2 illustrates a graph representation of a neural network, according to various embodiments.
Figure 3 illustrates an example of how a node evaluates a function based on an input tensor to generate an output tensor, according to various embodiments.
Figure 4 illustrates an example of how a node evaluates a function based on a masked input tensor to generate an output tensor, according to various embodiments.
Figure 5 illustrates an example of how a node evaluates a function based on a dense version of an input tensor, according to various embodiments.
Figure 6 illustrates adjacent nodes across which a scatter operation can be propagated, according to various embodiments.
Figure 7 illustrates how a scatter operation is propagated between the adjacent nodes of Figure 6, according to various embodiments.
Figure 8 is a flow diagram of method steps for removing masks from neural networks, according to various embodiments.
Figure 9 is a block diagram illustrating a computer system configured to implement one or more aspects of various embodiments.
Figure 10 is a block diagram of a parallel processing unit (PPU) included in the parallel processing subsystem of Figure 9, according to various embodiments.
Figure 11 is a block diagram of a general processing cluster (GPC) included in the parallel processing unit (PPU) of Figure 10, according to various embodiments.

### DETAILED DESCRIPTION

In the following description, numerous specific details are set forth to provide a more thorough understanding of the various embodiments. However, it will be apparent to one skilled in the art that the inventive concepts may be practiced without one or more of these specific details.

As noted above, a neural network may include one or more tensors that are processed during execution of the artificial neural network to perform one or more operations. Tensors can be very large in size, and, thus, in some instances, are not processed quickly. To address this issue, artificial neural networks can be "pruned" in order to increase the speed with which the corresponding tensors can be processed.

Pruning a neural network typically involves generating one or more masks that zero out elements of the tensor(s) included in the neural network. Although pruning reduces the overall size of the neural network, pruning the neural network does not significantly and/or reliably accelerate the inference time of the neural network. In particular, operations involving tensors of the pruned neural network that are at least partially zeroed out by masks are still performed, even though the operations yield results that do not impact the ultimate inference output of the neural network.

Various embodiments disclosed herein include a technique for removing masks from a pruned neural network, where the pruned neural network is represented by a graph of nodes. A given node in the graph includes at least one tensor (W) and a corresponding mask (M). The operation M·W zeroes out elements of W. A first function associated with the given node is evaluated based on M·W to produce an output tensor, X, of the node. The output tensor X is supplied as an input to one or more subsequent nodes in the graph.

In one embodiment, in order to remove the mask M applied to the given node, a dense version of the tensor W, denoted w, replaces M·W. The tensor w has smaller dimensions than W, and, consequently, operations involving w can be performed much more rapidly than those involving tensor W. In particular, the first function can be evaluated based on w faster than the first function can be evaluated based on M·W. Evaluation of the first function based on tensor w generates a smaller output tensor, denoted x. Because a subsequent node in the neural network expects the given node to provide an output with the larger dimensions of tensor X, a scatter operation is inserted in the subsequent node in order to add zeros into tensor x, thereby expanding tensor x to produce tensor X (or an equivalently dimensioned tensor). Operations associated with the given node can therefore be performed in an expedited manner because less data needs to be processed. The scatter operation can be propagated forward through the graph, towards the output, to accelerate other functions. The scatter operation can also be coalesced with other scatter operations and/or absorbed into a subsequent node. Via the disclosed techniques, a pruned neural network that includes one or more masks can be modified to produce an optimized neural network.

At least one technological advantage of the techniques described herein is that the optimized neural network performs inference operations faster than the original pruned neural network. Accordingly, the optimized neural network is well-suited for use in real-time applications, such as autonomous vehicles. Another advantage of the techniques described herein is that the optimized neural network may have a smaller memory footprint compared to the pruned neural network, thereby conserving memory resources. These technological advantages represent multiple technological advancements relative to prior art approaches.

### System Overview

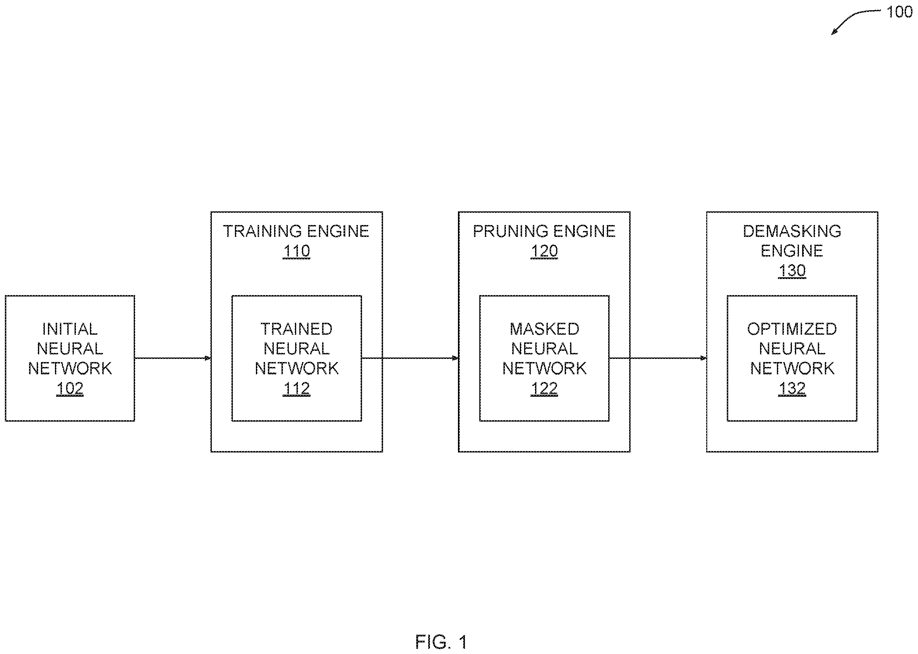

Figure 1 illustrates a system configured to implement one or more aspects of the various embodiments. As shown, in one embodiment, a neural network optimization pipeline 100 includes a training engine 110, a pruning engine 120, and a demasking engine 130.

In one embodiment, training engine 110 generates and trains an initial neural network 102 to generate a trained neural network 112. During training, training engine 110 iteratively adjusts one or more tensors included in initial neural network 102 based on training data to cause the output of initial neural network 102 to more closely match target output. When training is complete, trained neural network 112 includes one or more tensors derived from the one or more tensors included in initial neural network 102. Training engine 110 may implement any technically feasible training procedure to generate trained neural network 112, including backpropagation and/or gradient descent, among others. Trained neural network 112 is generally capable of performing inference operations to generate output data based on input data that is not included in the training data.

In one embodiment, pruning engine 120 prunes trained neural network 112 to generate a masked neural network 122. During pruning, pruning engine 120 identifies redundant elements within one or more of the tensors included in trained neural network 112 and then generates one or more masks that cause those specific elements to be multiplied by zero (zeroed). Elements of a tensor may be considered "redundant" when those elements do not contribute to an output when the tensor is processed. Because the identified elements are redundant, those elements can be zeroed without adversely affecting the functional characteristics of masked neural network 122. Zeroing redundant elements in this manner can reduce the computational load associated with processing some or all of the tensors included in masked neural network 122.

In one embodiment, training engine 110 and pruning engine 120 interoperate with one another to both train initial neural network 102 and prune initial neural network 102 in conjunction with one another. For example, training engine 110 could perform a first training pass to modify a portion of initial neural network 102, and then pruning engine 120 could perform a pruning pass to insert one or more masks into the at least partially trained version of initial neural network 102. In this manner, training engine 110 and pruning engine 120 may coordinate operations to generate masked neural network 122.

In one embodiment, demasking engine 130 performs a demasking procedure with masked neural network 122 to generate an optimized neural network 132. During the demasking procedure, demasking engine 130 removes from masked neural network 122 the one or more masks previously introduced by pruning engine 120, as mentioned above, and applies various other modifications to masked neural network 122 to produce optimized neural network 132. Optimized neural network 132 has the same or similar functional characteristics as masked neural network 122. However, optimized neural network 132 can perform various processing operations faster than masked neural network 122 can perform those processing operations, including inference operations, among others.

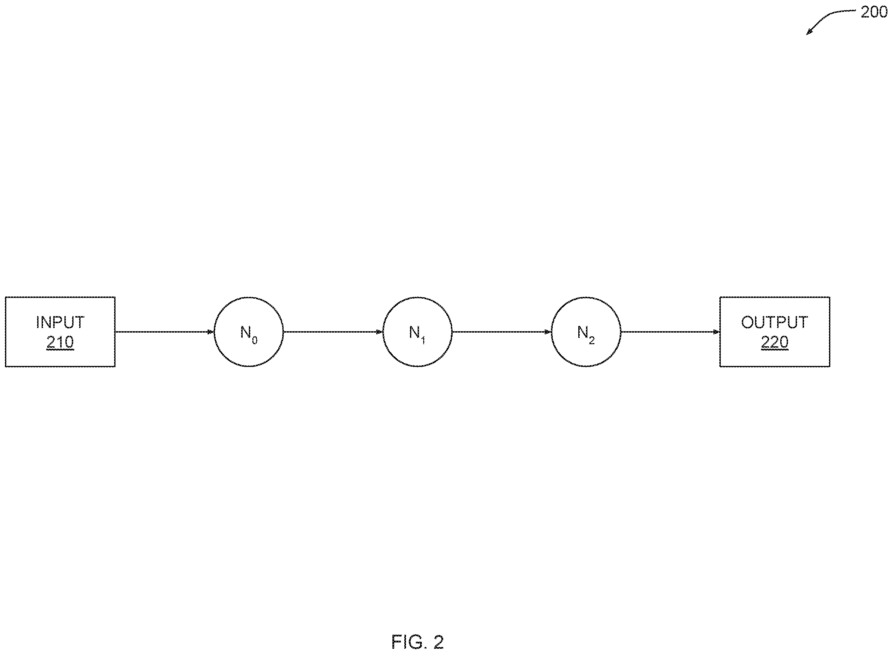

In one embodiment, any of initial neural network 102, trained neural network 112, masked neural network 122, and optimized neural network 132 may be represented by a graph of nodes coupled together by a set of edges. Each node may be associated with one or more tensors and one or more functions that are evaluated based on the one or more tensors. Figure 2 illustrates a graph of nodes that may represent any of the neural networks shown in Figure 1.

### Example Graph Representation of a Neural Network

Figure 2 illustrates a graph representation of a neural network, according to various embodiments. As shown, in one embodiment, a graph representation 200 includes an input 210, a collection of nodes N0, N1, and N2, and an output 220. Node N0 processes input 210 to generate output that is supplied to node N1. Node N1 processes the received input to generate output that is supplied to node N2. Node N2 processes the received input to generate output 220. Graph representation 200 is presented here as just one example of a graph of nodes that may represent a neural network.

In one embodiment, each node included in graph representation 200 corresponds to a neural network-oriented function and one or more tensors. For example, node N0 could correspond to a convolution function, a concatenation function, a matrix multiply function, an activation function, or a rectifier linear unit (ReLU) function, among others. Further, the function associated with node N0 could be evaluated based on one or more input tensors to generate one or more output tensors. In one embodiment, a given input tensor may be associated with an inbound edge of a given node, and given output tensor may be associated with an outbound edge of a given node.

In one embodiment, graph representation 200 represents initial neural network 102, and one or more nodes of graph representation 200 produce output tensors that do not match target outputs. During the training procedure discussed above in conjunction with Figure 1, training engine 110 iteratively adjusts one or more input tensors associated with the one or more nodes in order to cause the output tensors to a more closely match the target outputs.

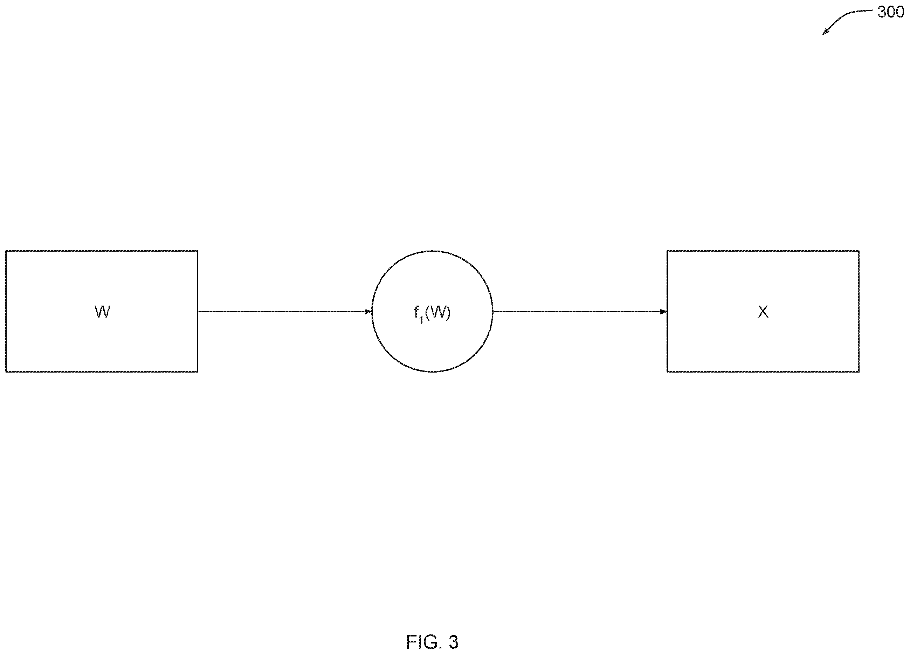

In one embodiment, graph representation 200 represents trained neural network 112, and one or more nodes of graph representation correspond to tensors that are at least partially redundant. As referred to herein, a "redundant" element of a tensor is one that does not contribute to the output of a function evaluated based on the tensor. During the pruning procedure discussed above in conjunction with Figure 1, pruning engine 120 incorporates masks into the one or more nodes in order to zero out the redundant elements of the associated tensors, thereby generating masked neural network 122. Figures 3-4 illustrate an example of how pruning engine 120 incorporates a mask into a node.

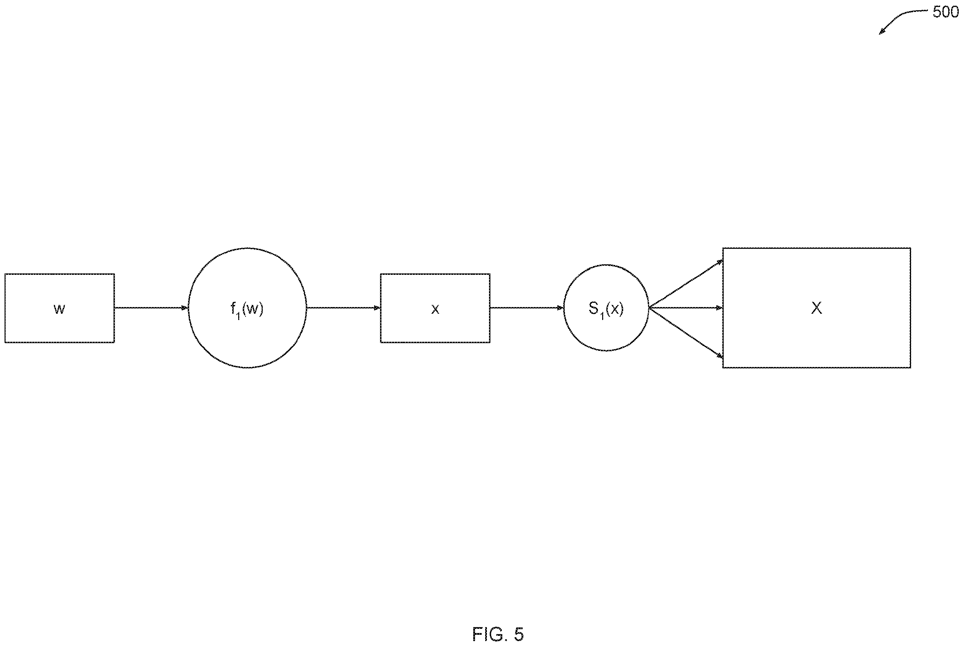

In one embodiment, graph representation 200 represents masked neural network 122, and one or more nodes of graph representation 200 include masks that zero out elements of input tensors associated with those nodes, as mentioned above. During the demasking procedure discussed above in conjunction with Figure 1, demasking engine 130 removes these masks and applies various other modifications to some or all nodes to generate optimized neural network 132. Optimized neural network 132 includes tensors that are smaller in size than corresponding tensors included in masked neural network 122. Accordingly, optimized neural network 132 can execute more quickly compared to masked neural network 122. Figures 5-7 illustrate an example of how demasking engine 130 demasks a node and performs various other optimization operations.

### Example Pruning and Demasking Procedure

Figure 3 illustrates an example of how a node evaluates a function based on an input tensor to generate an output tensor, according to various embodiments. As shown, in one embodiment, a node 300 includes a tensor W, a function f₁, and a tensor X. Node 300 may be included in a graph representation of trained neural network 112, among others. Training engine 110 generates node 300 during the training procedure discussed above in conjunction with Figures 1-2. When node 300 is executed, function f₁ is evaluated based on tensor W to produce tensor X. Function f₁ may be any technically feasible function configured to operate on one or more input tensors to generate one or more output tensors.

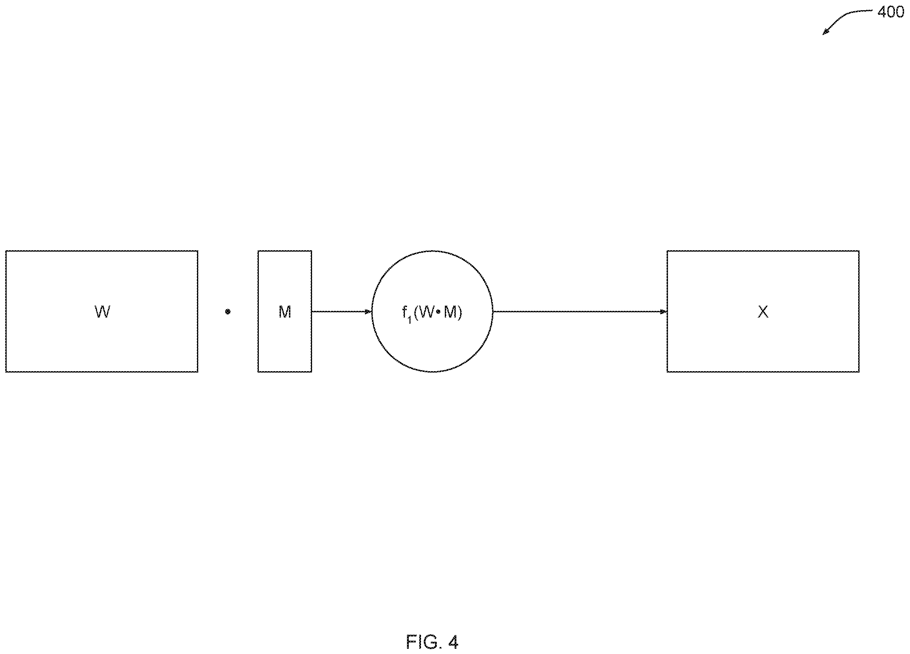

In one embodiment, pruning engine 120 may apply modifications to node 300 to simplify the evaluation of function f₁, as described in greater detail below in conjunction with Figure 4.

Figure 4 illustrates an example of how a node evaluates a function based on a masked input tensor to generate an output tensor, according to various embodiments. As shown, in one embodiment, a node 400 includes tensor W, a mask M, function f₁, and tensor X. Node 400 may be included in a graph representation of trained neural network 112. Pruning engine 120 generates node 400 based on node 300 shown in Figure 3 during the pruning procedure discussed above in conjunction with Figure 1-2. In particular, pruning engine 120 identifies elements of W that do not contribute to tensor X and then generates mask M to zero out these elements, thereby easing the computational burden of evaluating function f₁. When node 400 is executed, function f₁ is evaluated based on tensor W and mask M to produce tensor X.

In one embodiment, evaluating f₁(W·M) may be more computationally efficient than evaluating f₁(W). In practice, though, implementing mask M to zero out redundant elements of tensor W may not significantly increase computational efficiency because the zeroed-out elements are still processed during the evaluation of f₁(W·M). To address this issue, demasking engine 230 may perform a technique to remove masks and perform other optimizations, as described in greater detail below in conjunction with Figures 5-7.

Figure 5 illustrates an example of how a node evaluates a function based on a dense version of an input tensor, according to various embodiments. As shown, in one embodiment, a node 500 includes a tensor w, function f₁, a tensor x, a scatter operation S₁, and tensor X. Demasking engine 130 generates node 500 based on node 400 of Figure 4 during the demasking procedure discussed above in conjunction with Figure 1-2. In particular, demasking engine 130 replaces tensor W with tensor w. Tensor w is a denser version of tensor W and has a smaller dimensionality than tensor W. To generate tensor w, demasking engine 130 identifies portions of tensor W that are zeroed out via mask M of Figure 4 and then removes these portions of tensor W to produce tensor w. The portions of tensor w that remain are complimentary to the zeroed out portions of tensor W and may be referred to as corresponding thereto. When node 500 is executed, function f₁ is evaluated based tensor w instead of tensor W. Because tensor w has a smaller dimensionality than tensor W, f₁(w) can be evaluated significantly faster than f₁(W).

In one embodiment, evaluating f₁(w) produces tensor x with a smaller dimensionality than tensor X of Figures 3-4. In some situations, a node that resides subsequently to node 500 may expect a tensor as input that has the same dimensionality as tensor X. To address this issue, demasking engine 130 generates scatter operation S₁ in order to expand tensor x to produce tensor X (or an equivalently dimensioned tensor). Scatter operation S₁ inserts zeros into tensor x corresponding to elements of tensor W previously zeroed out via mask M and subsequently removed, thus restoring the dimensionality of tensor x to that associated with tensor X. Accordingly, the node residing subsequently to node 500 receives as input a tensor having the expected dimensionality of tensor X.

In one embodiment, scatter operation S₁ may insert any technically feasible value into a given tensor, instead of or in addition to inserting zeros. For example, suppose function f₁ is a sigmoid function that maps zeros included in tensor W to ones included in tensor X. Scatter operation S₁ could insert ones into tensor x to compensate for zeros removed from tensor W.

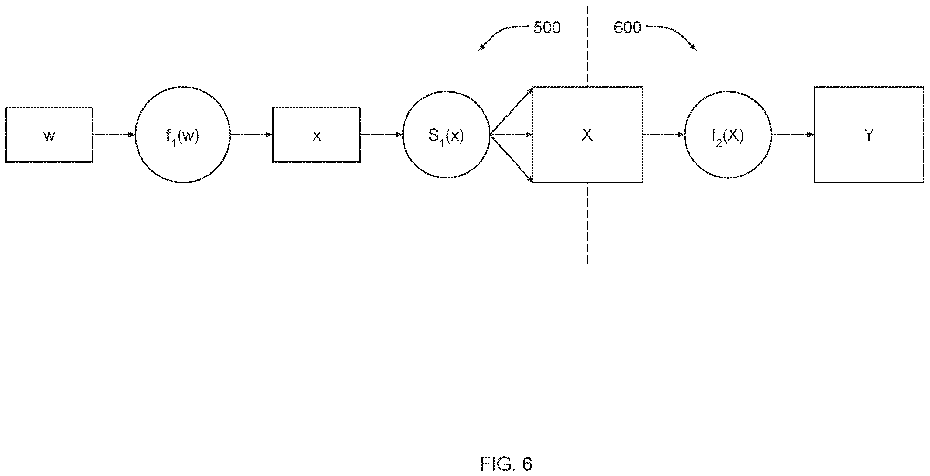

In one embodiment, demasking engine 130 performs the technique described above with each node included in graph representation 200, thereby incorporating one or more scatter operations into that graph representation. Then, demasking engine 130 iteratively propagates one or more of these scatter operations towards the output of graph representation 200, as described in greater detail below in conjunction with Figures 6-7.

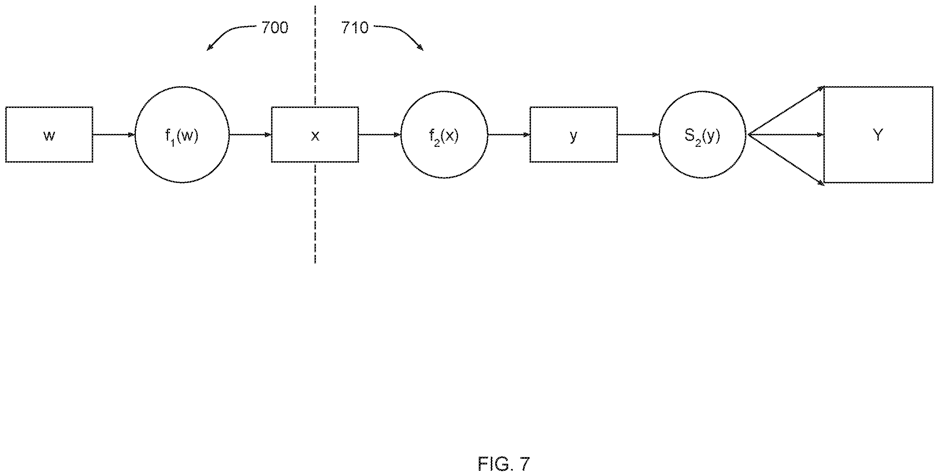

Figure 6 illustrates adjacent nodes across which a scatter operation can be propagated, according to various embodiments. As shown, node 500 of Figure 5 resides adjacent to a subsequent node 600. Node 600 includes a function f₂ and a tensor Y. Function f₂ is evaluated, based on tensor X, to produce tensor Y. Demasking engine 130 propagates scatter operation S₁ from node 500 to node 600 in order to ease the computational burden of evaluating function f₂(X), as described in greater detail below in conjunction with Figure 7.

Figure 7 illustrates how a scatter operation is propagated between the adjacent nodes of Figure 6, according to various embodiments. As shown, node 700 includes tensor w, function f₁, and tensor x. Node 700 includes the same elements as node 500 except that scatter operation S₁ and tensor X are omitted. Node 710 includes function f₂, tensor y, scatter operation S₂, and tensor Y. Demasking engine 130 generates scatter operation S₂ by propagating scatter operation S₁ forward into node 710. Accordingly, function f₂ can be evaluated based on tensor x instead of the larger tensor X. Because tensor x has a smaller dimensionality than output tensor X, f₂(x) can be evaluated faster than f₂(X).

In one embodiment, evaluating f₂(x) produces output tensor y with a smaller dimensionality than output tensor Y of Figure 6. Subsequent nodes may expect input having the dimensionality of Y, though. To address this issue, scatter operation S₂ expands tensor y into output tensor Y (or an equivalently dimensioned tensor). Scatter operation S₂ inserts zeros into tensor y that correspond to any elements of W and/or X zeroed out via masks. Accordingly, a node residing subsequently to node 710 receives an input tensor having the expected dimensionality associated with Y.

In one embodiment, demasking engine 130 propagates scatter operation S₁ of Figure 6 forward to node 710 by combining scatter operation S₁ with any scatter operations previously associated with node 710. For example, node 710 could include a scatter operation introduced by demasking engine 130 in the manner described above in conjunction with Figure 5. Demasking engine 130 would combine scatter operation S₁ with any such pre-existing scatter operations associated with node 710. As a general matter, any two or more scatter operations can be combined when the zeros inserted via those scatter operations are aligned along the same dimension. For example, two scatter operations that both insert zeros along different rows could be combined to form one scatter operation that inserts zeros along both of those rows.

In one embodiment, demasking engine 130 propagates scatter operation S₁ of Figure 6 forward to node 710 and then stacks scatter operation S₁ alongside any scatter operations previously associated with node 710. Demasking engine 130 may propagate and then stack a given scatter operation adjacent to another scatter operation when those two scatter operations insert zeros along different dimensions. For example, scatter operation S₁ could be propagated forward to insert a row of zeros into output tensor y, and demasking engine 130 could stack scatter operation S₁ adjacent to another scatter operation that inserts a column of zeros into output tensor y.

In one embodiment, demasking engine 130 propagates scatter operation S₁ forward and causes node 710 to absorb that scatter operation. For example, referring to Figure 6, suppose scatter operation S₁ inserts a column of zeros into tensor x to generate tensor X. Suppose also that function f₂ is a matrix-multiply operation that multiplies tensor X by an input tensor. Because the column of zeros inserted into X is multiplied by a corresponding row of the input tensor, scatter operation S₁ can be removed so long as the corresponding row of the input tensor is also removed. This approach does not change the dimensionality of the output tensor but obviates the need for scatter operation S₁.

In one embodiment, demasking engine 130 generates gather operations in addition to, or instead of, generating scatter operations. For example, demasking engine 130 could generate a gather operation that resides subsequent to node and selects a subset of an output tensor of that node to pass along to a subsequent node. Because the subsequent node only receives a subset of the output tensor, computations involving that subset can be performed faster than equivalent computations performed with the output tensor. Demasking engine 130 may also propagate gather operations towards the input of graph representation 200 and combine, stack, and/or absorb gather operations analogously to how demasking engine 130 combines, stacks, and/or absorbs scatter operations.

Referring generally to Figures 3-7, in various embodiments, the techniques described in conjunction with these Figures can be advantageously applied to generate optimized neural network 132. The disclosed techniques can be applied to any technically feasible neural network and/or any technically feasible graph representation thereof. The disclosed techniques can also be applied to any portion of a neural network, including one or more layers, components, or elements, among others. Optimized neural network 132 can perform inference operations significantly faster than masked neural network 122 while preserving the functional characteristics of masked neural network 122. Accordingly, the disclosed techniques represent a significant advancement over prior art techniques that cannot confer similar increases in inference speed.

### Procedure for Demasking a Masked Neural Network

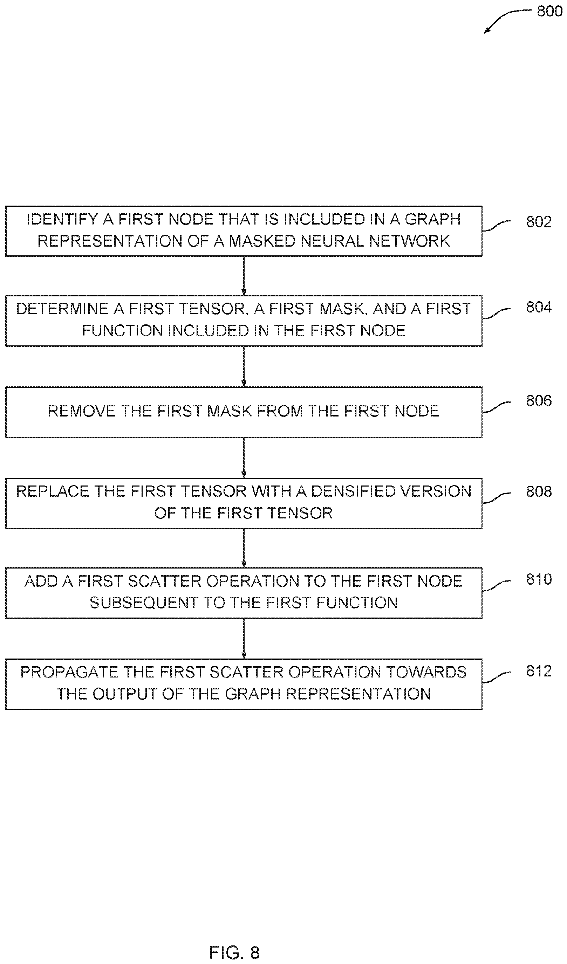

Figure 8 is a flow diagram of method steps for removing masks from a neural network, according to various embodiments. Although the method steps are described in conjunction with the systems of Figures 1-7, persons skilled in the art will understand that any system configured to perform the method steps in any order falls within the scope of the present embodiments.

As shown, a method 800 begins at step 802, where demasking engine 130 identifies a first node that is included in a graph representation of a masked neural network. In one embodiment, the graph representation of the masked neural network may be graph representation 200 of Figure 2 configured with a set of masked tensors, as illustrated in Figure 4.

At step 804, demasking engine 130 determines a first tensor, a first mask, and a first function included in the first node. In one embodiment, demasking engine 130 traverses the graph representation of the neural network node by node and iteratively processes each node. Demasking engine 130 may analyze the first node to extract the first tensor, the first mask, and the first function by parsing program code associated with the first node.

At step 806, demasking engine 130 removes the first mask from the first node. In one embodiment, the first mask zeros elements of the first tensor that do not contribute to the output of the first function. These elements may be considered redundant and can safely be eliminated without adversely affecting the output of the first function. Pruning engine 120 of Figure 1 may generate the first mask via the pruning procedure described above.

At step 808, demasking engine 130 replaces the first tensor with a densified version of the first tensor. As referred to herein, the term "densified" refers to a denser version of a tensor. In one embodiment, demasking engine 130 generates a densified version of a given tensor by analyzing a mask associated with the tensor and identifying portions of the tensor that are zeroed out by the mask. Demasking engine 130 may then remove these portions from the tensor to produce a smaller, denser, version of the tensor. A given function evaluated based on the smaller, denser version of the tensor can be evaluated more quickly than the given functions can be evaluated based on the original, larger tensor.

At step 810, demasking engine 130 adds a first scatter operation proximate to the first node subsequent to the first function. Because the first function receives the densified version of the tensor as input, when the first function is evaluated, the first function may produce a smaller, denser output compared to the output produced when the first function is evaluated based on the original, larger tensor. In various embodiments, the first scatter operation expands that smaller, denser output to have a dimensionality associated with a previous output of the first function. Accordingly, downstream nodes that expect input having a specific dimensionality are provided with input data having that dimensionality.

At step 812, demasking engine 130 propagates the first scatter operation towards the output of the graph representation. Demasking engine 130 can propagate the first scatter operation via one or more different techniques. In one embodiment, demasking engine 130 removes the first scatter operation from a position subsequent to the first node and generates a second scatter operation at a position subsequent to a second node. The second node then receives as input the smaller, denser output of the first function and can therefore be evaluated faster. The second scatter operation expands the output of the second function to coincide with an expected dimensionality associated with a subsequent node. In another embodiment, demasking engine 130 combines the first scatter operation with at least one other scatter operation when those scatter operations insert zeros along the same axis. In another embodiment, demasking engine 130 stacks the first scatter operation alongside at least one other scatter operation when those scatter operations insert zeros along different axes. In yet another embodiment, demasking engine 130 causes a subsequent node to absorb a scatter operation by modifying an input tensor processed by the subsequent node.

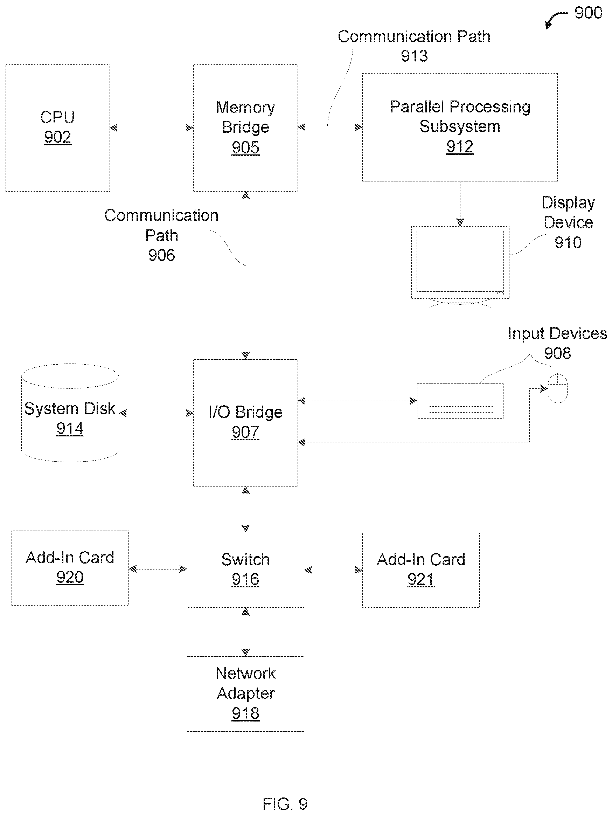

Referring generally to Figures 1-8, persons skilled in the art will understand that the disclosed techniques can be implemented via any technically feasible combination of computer hardware and/or software. An example computer system configured to execute neural network optimization pipeline 100 and/or optimized neural network 132 is described in greater detail below in conjunction with Figures 9-11.

### Example Hardware Architecture

Figure 9 is a block diagram illustrating a computer system 900 configured to implement one or more aspects of various embodiments. In some embodiments, computer system 900 is a server machine operating in a data center or a cloud computing environment that provides scalable computing resources as a service over a network. In one embodiment, various elements of computer system 900 execute neural network optimization pipeline 100 and/or optimized neural network 132 of Figure 1.

In various embodiments, computer system 900 includes, without limitation, a central processing unit (CPU) 902 and a system memory 904 coupled to a parallel processing subsystem 912 via a memory bridge 905 and a communication path 913. Memory bridge 905 is further coupled to an I/O (input/output) bridge 907 via a communication path 906, and I/O bridge 907 is, in turn, coupled to a switch 916.

In one embodiment, I/O bridge 907 is configured to receive user input information from optional input devices 908, such as a keyboard or a mouse, and forward the input information to CPU 902 for processing via communication path 906 and memory bridge 905. In some embodiments, computer system 900 may be a server machine in a cloud computing environment. In such embodiments, computer system 900 may not have input devices 908. Instead, computer system 900 may receive equivalent input information by receiving commands in the form of messages transmitted over a network and received via the network adapter 918. In one embodiment, switch 916 is configured to provide connections between I/O bridge 907 and other components of the computer system 900, such as a network adapter 918 and various add-in cards 920 and 921.

In one embodiment, I/O bridge 907 is coupled to a system disk 914 that may be configured to store content and applications and data for use by CPU 902 and parallel processing subsystem 912. In one embodiment, system disk 914 provides nonvolatile storage for applications and data and may include fixed or removable hard disk drives, flash memory devices, and CD-ROM (compact disc read-only-memory), DVD-ROM (digital versatile disc-ROM), Blu-ray, HD-DVD (high definition DVD), or other magnetic, optical, or solid state storage devices. In various embodiments, other components, such as universal serial bus or other port connections, compact disc drives, digital versatile disc drives, film recording devices, and the like, may be connected to I/O bridge 907 as well.

In various embodiments, memory bridge 905 may be a Northbridge chip, and I/O bridge 907 may be a Southbridge chip. In addition, communication paths 906 and 913, as well as other communication paths within computer system 900, may be implemented using any technically suitable protocols, including, without limitation, AGP (Accelerated Graphics Port), HyperTransport, or any other bus or point-to-point communication protocol known in the art.

In some embodiments, parallel processing subsystem 912 comprises a graphics subsystem that delivers pixels to an optional display device 910 that may be any conventional cathode ray tube, liquid crystal display, light-emitting diode display, or the like. In such embodiments, the parallel processing subsystem 912 incorporates circuitry optimized for graphics and video processing, including, for example, video output circuitry. As described in greater detail below in conjunction with Figures 8 and 9, such circuitry may be incorporated across one or more parallel processing units (PPUs), also referred to herein as parallel processors, included within parallel processing subsystem 912. In other embodiments, the parallel processing subsystem 912 incorporates circuitry optimized for general purpose and/or compute processing. Again, such circuitry may be incorporated across one or more PPUs included within parallel processing subsystem 912 that are configured to perform such general purpose and/or compute operations. In yet other embodiments, the one or more PPUs included within parallel processing subsystem 912 may be configured to perform graphics processing, general purpose processing, and compute processing operations. System memory 904 includes at least one device driver configured to manage the processing operations of the one or more PPUs within parallel processing subsystem 912.

In various embodiments, parallel processing subsystem 912 may be integrated with one or more of the other elements of Figure 9 to form a single system. For example, parallel processing subsystem 912 may be integrated with CPU 902 and other connection circuitry on a single chip to form a system on chip (SoC).

In one embodiment, CPU 902 is the master processor of computer system 900, controlling and coordinating operations of other system components. In one embodiment, CPU 902 issues commands that control the operation of PPUs. In some embodiments, communication path 913 is a PCI Express link, in which dedicated lanes are allocated to each PPU, as is known in the art. Other communication paths may also be used. PPU advantageously implements a highly parallel processing architecture. A PPU may be provided with any amount of local parallel processing memory (PP memory).

It will be appreciated that the system shown herein is illustrative and that variations and modifications are possible. The connection topology, including the number and arrangement of bridges, the number of CPUs 902, and the number of parallel processing subsystems 912, may be modified as desired. For example, in some embodiments, system memory 904 could be connected to CPU 902 directly rather than through memory bridge 905, and other devices would communicate with system memory 904 via memory bridge 905 and CPU 902. In other embodiments, parallel processing subsystem 912 may be connected to I/O bridge 907 or directly to CPU 902, rather than to memory bridge 905. In still other embodiments, I/O bridge 907 and memory bridge 905 may be integrated into a single chip instead of existing as one or more discrete devices. Lastly, in certain embodiments, one or more components shown in Figure 9 may not be present. For example, switch 916 could be eliminated, and network adapter 918 and add-in cards 920, 921 would connect directly to I/O bridge 907.

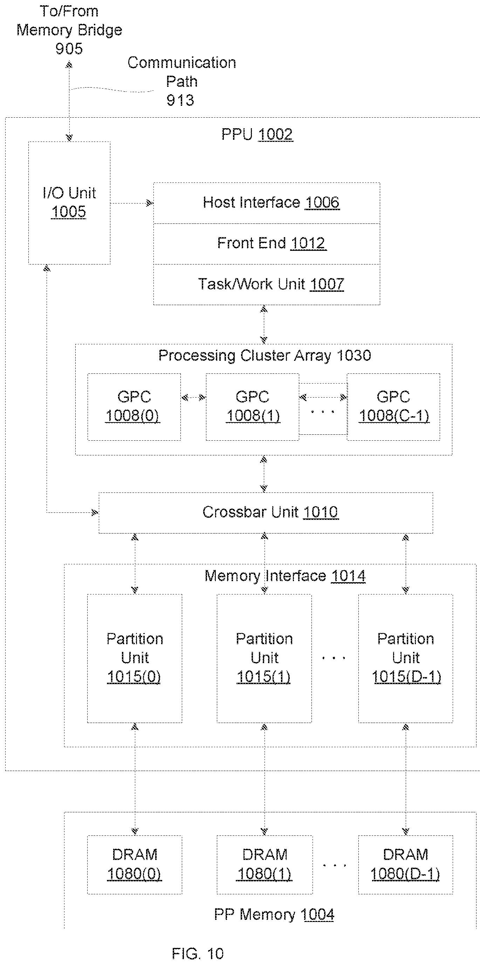

Figure 10 is a block diagram of a parallel processing unit (PPU) 1002 included in the parallel processing subsystem 912 of Figure 9, according to various embodiments. Although Figure 10 depicts one PPU 1002, as indicated above, parallel processing subsystem 912 may include any number of PPUs 1002. As shown, PPU 1002 is coupled to a local parallel processing (PP) memory 1004. PPU 1002 and PP memory 1004 may be implemented using one or more integrated circuit devices, such as programmable processors, application specific integrated circuits (ASICs), or memory devices, or in any other technically feasible fashion.

In some embodiments, PPU 1002 comprises a graphics processing unit (GPU) that may be configured to implement a graphics rendering pipeline to perform various operations related to generating pixel data based on graphics data supplied by CPU 902 and/or system memory 904. When processing graphics data, PP memory 1004 can be used as graphics memory that stores one or more conventional frame buffers and, if needed, one or more other render targets as well. Among other things, PP memory 1004 may be used to store and update pixel data and deliver final pixel data or display frames to an optional display device 910 for display. In some embodiments, PPU 1002 also may be configured for general-purpose processing and compute operations. In some embodiments, computer system 900 may be a server machine in a cloud computing environment. In such embodiments, computer system 900 may not have a display device 910. Instead, computer system 900 may generate equivalent output information by transmitting commands in the form of messages over a network via the network adapter 918.

In some embodiments, CPU 902 is the master processor of computer system 900, controlling and coordinating operations of other system components. In one embodiment, CPU 902 issues commands that control the operation of PPU 1002. In some embodiments, CPU 902 writes a stream of commands for PPU 1002 to a data structure (not explicitly shown in either Figure 9 or Figure 10) that may be located in system memory 904, PP memory 1004, or another storage location accessible to both CPU 902 and PPU 1002. A pointer to the data structure is written to a command queue, also referred to herein as a pushbuffer, to initiate processing of the stream of commands in the data structure. In one embodiment, the PPU 1002 reads command streams from the command queue and then executes commands asynchronously relative to the operation of CPU 902. In embodiments where multiple pushbuffers are generated, execution priorities may be specified for each pushbuffer by an application program via device driver to control scheduling of the different pushbuffers.

In one embodiment, PPU 1002 includes an I/O (input/output) unit 1005 that communicates with the rest of computer system 900 via the communication path 913 and memory bridge 905. In one embodiment, I/O unit 1005 generates packets (or other signals) for transmission on communication path 913 and also receives all incoming packets (or other signals) from communication path 913, directing the incoming packets to appropriate components of PPU 1002. For example, commands related to processing tasks may be directed to a host interface 1006, while commands related to memory operations (e.g., reading from or writing to PP memory 1004) may be directed to a crossbar unit 1010. In one embodiment, host interface 1006 reads each command queue and transmits the command stream stored in the command queue to a front end 1012.

As mentioned above in conjunction with Figure 9, the connection of PPU 1002 to the rest of computer system 900 may be varied. In some embodiments, parallel processing subsystem 912, which includes at least one PPU 1002, is implemented as an add-in card that can be inserted into an expansion slot of computer system 900. In other embodiments, PPU 1002 can be integrated on a single chip with a bus bridge, such as memory bridge 905 or I/O bridge 907. Again, in still other embodiments, some or all of the elements of PPU 1002 may be included along with CPU 902 in a single integrated circuit or system of chip (SoC).

In one embodiment, front end 1012 transmits processing tasks received from host interface 1006 to a work distribution unit (not shown) within task/work unit 1007. In one embodiment, the work distribution unit receives pointers to processing tasks that are encoded as task metadata (TMD) and stored in memory. The pointers to TMDs are included in a command stream that is stored as a command queue and received by the front end unit 1012 from the host interface 1006. Processing tasks that may be encoded as TMDs include indices associated with the data to be processed as well as state parameters and commands that define how the data is to be processed. For example, the state parameters and commands could define the program to be executed on the data. Also for example, the TMD could specify the number and configuration of the set of CTAs. Generally, each TMD corresponds to one task. The task/work unit 1007 receives tasks from the front end 1012 and ensures that GPCs 1008 are configured to a valid state before the processing task specified by each one of the TMDs is initiated. A priority may be specified for each TMD that is used to schedule the execution of the processing task. Processing tasks also may be received from the processing cluster array 1030. Optionally, the TMD may include a parameter that controls whether the TMD is added to the head or the tail of a list of processing tasks (or to a list of pointers to the processing tasks), thereby providing another level of control over execution priority.

In one embodiment, PPU 1002 implements a highly parallel processing architecture based on a processing cluster array 1030 that includes a set of C general processing clusters (GPCs) 1008, where C ≥ 1. Each GPC 1008 is capable of executing a large number (e.g., hundreds or thousands) of threads concurrently, where each thread is an instance of a program. In various applications, different GPCs 1008 may be allocated for processing different types of programs or for performing different types of computations. The allocation of GPCs 1008 may vary depending on the workload arising for each type of program or computation.

In one embodiment, memory interface 1014 includes a set of D of partition units 1015, where D ≥ 1. Each partition unit 1015 is coupled to one or more dynamic random access memories (DRAMs) 1020 residing within PPM memory 1004. In some embodiments, the number of partition units 1015 equals the number of DRAMs 1020, and each partition unit 1015 is coupled to a different DRAM 1020. In other embodiments, the number of partition units 1015 may be different than the number of DRAMs 1020. Persons of ordinary skill in the art will appreciate that a DRAM 1020 may be replaced with any other technically suitable storage device. In operation, various render targets, such as texture maps and frame buffers, may be stored across DRAMs 1020, allowing partition units 1015 to write portions of each render target in parallel to efficiently use the available bandwidth of PP memory 1004.

In one embodiment, a given GPC 1008 may process data to be written to any of the DRAMs 1020 within PP memory 1004. In one embodiment, crossbar unit 1010 is configured to route the output of each GPC 1008 to the input of any partition unit 1015 or to any other GPC 1008 for further processing. GPCs 1008 communicate with memory interface 1014 via crossbar unit 1010 to read from or write to various DRAMs 1020. In some embodiments, crossbar unit 1010 has a connection to I/O unit 1005, in addition to a connection to PP memory 1004 via memory interface 1014, thereby enabling the processing cores within the different GPCs 1008 to communicate with system memory 904 or other memory not local to PPU 1002. In the embodiment of Figure 10, crossbar unit 1010 is directly connected with I/O unit 1005. In various embodiments, crossbar unit 1010 may use virtual channels to separate traffic streams between the GPCs 1008 and partition units 1015.

In one embodiment, GPCs 1008 can be programmed to execute processing tasks relating to a wide variety of applications, including, without limitation, linear and nonlinear data transforms, filtering of video and/or audio data, modeling operations (e.g., applying laws of physics to determine position, velocity and other attributes of objects), image rendering operations (e.g., tessellation shader, vertex shader, geometry shader, and/or pixel/fragment shader programs), general compute operations, etc. In operation, PPU 1002 is configured to transfer data from system memory 904 and/or PP memory 1004 to one or more on-chip memory units, process the data, and write result data back to system memory 904 and/or PP memory 1004. The result data may then be accessed by other system components, including CPU 902, another PPU 1002 within parallel processing subsystem 912, or another parallel processing subsystem 912 within computer system 900.

In one embodiment, any number of PPUs 1002 may be included in a parallel processing subsystem 912. For example, multiple PPUs 1002 may be provided on a single add-in card, or multiple add-in cards may be connected to communication path 913, or one or more of PPUs 1002 may be integrated into a bridge chip. PPUs 1002 in a multi-PPU system may be identical to or different from one another. For example, different PPUs 1002 might have different numbers of processing cores and/or different amounts of PP memory 1004. In implementations where multiple PPUs 1002 are present, those PPUs may be operated in parallel to process data at a higher throughput than is possible with a single PPU 1002. Systems incorporating one or more PPUs 1002 may be implemented in a variety of configurations and form factors, including, without limitation, desktops, laptops, handheld personal computers or other handheld devices, servers, workstations, game consoles, embedded systems, and the like.

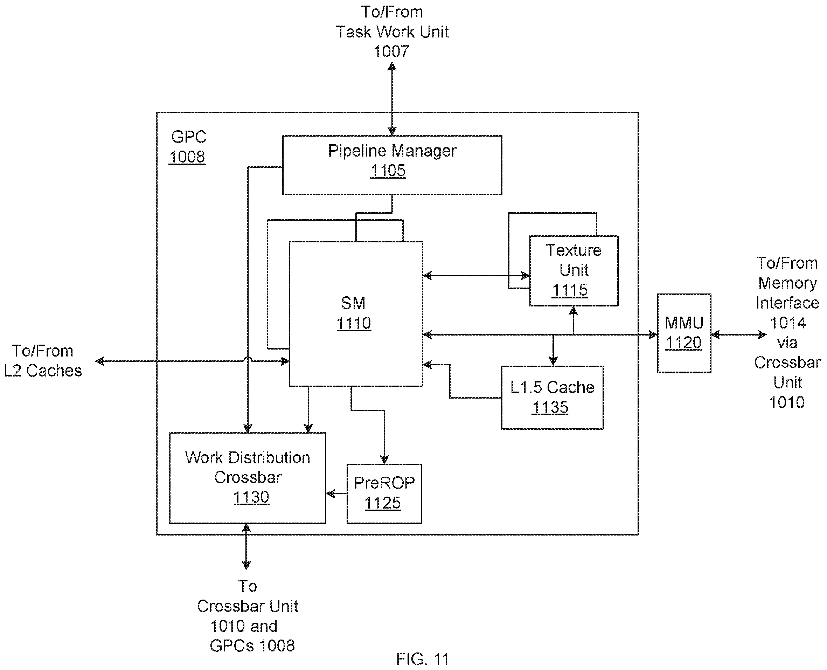

Figure 11 is a block diagram of a general processing cluster (GPC) 1008 included in the parallel processing unit (PPU) 1002 of Figure 10, according to various embodiments. As shown, the GPC 1008 includes, without limitation, a pipeline manager 1105, one or more texture units 1115, a preROP unit 1125, a work distribution crossbar 1130, and an L1.5 cache 1135.

In one embodiment, GPC 1008 may be configured to execute a large number of threads in parallel to perform graphics, general processing and/or compute operations. As used herein, a "thread" refers to an instance of a particular program executing on a particular set of input data. In some embodiments, single-instruction, multiple-data (SIMD) instruction issue techniques are used to support parallel execution of a large number of threads without providing multiple independent instruction units. In other embodiments, single-instruction, multiple-thread (SIMT) techniques are used to support parallel execution of a large number of generally synchronized threads, using a common instruction unit configured to issue instructions to a set of processing engines within GPC 1008. Unlike a SIMD execution regime, where all processing engines typically execute identical instructions, SIMT execution allows different threads to more readily follow divergent execution paths through a given program. Persons of ordinary skill in the art will understand that a SIMD processing regime represents a functional subset of a SIMT processing regime.

In one embodiment, operation of GPC 1008 is controlled via a pipeline manager 1105 that distributes processing tasks received from a work distribution unit (not shown) within task/work unit 1007 to one or more streaming multiprocessors (SMs) 1110. Pipeline manager 1105 may also be configured to control a work distribution crossbar 1130 by specifying destinations for processed data output by SMs 1110.

In various embodiments, GPC 1008 includes a set of M of SMs 1110, where M ≥ 1. Also, each SM 1110 includes a set of functional execution units (not shown), such as execution units and load-store units. Processing operations specific to any of the functional execution units may be pipelined, which enables a new instruction to be issued for execution before a previous instruction has completed execution. Any combination of functional execution units within a given SM 1110 may be provided. In various embodiments, the functional execution units may be configured to support a variety of different operations including integer and floating point arithmetic (e.g., addition and multiplication), comparison operations, Boolean operations (AND, OR, 5OR), bit-shifting, and computation of various algebraic functions (e.g., planar interpolation and trigonometric, exponential, and logarithmic functions, etc.). Advantageously, the same functional execution unit can be configured to perform different operations.

In various embodiments, each SM 1110 includes multiple processing cores. In one embodiment, the SM 1110 includes a large number (e.g., 128, etc.) of distinct processing cores. Each core may include a fully-pipelined, single-precision, double-precision, and/or mixed precision processing unit that includes a floating point arithmetic logic unit and an integer arithmetic logic unit. In one embodiment, the floating point arithmetic logic units implement the IEEE 754-2008 standard for floating point arithmetic. In one embodiment, the cores include 64 single-precision (32-bit) floating point cores, 64 integer cores, 32 double-precision (64-bit) floating point cores, and 8 tensor cores.

In one embodiment, tensor cores configured to perform matrix operations, and, in one embodiment, one or more tensor cores are included in the cores. In particular, the tensor cores are configured to perform deep learning matrix arithmetic, such as convolution operations for neural network training and inferencing. In one embodiment, each tensor core operates on a 4×4 matrix and performs a matrix multiply and accumulate operation D=A×B+C, where A, B, C, and D are 4×4 matrices.

In one embodiment, the matrix multiply inputs A and B are 16-bit floating point matrices, while the accumulation matrices C and D may be 16-bit floating point or 32-bit floating point matrices. Tensor Cores operate on 16-bit floating point input data with 32-bit floating point accumulation. The 16-bit floating point multiply requires 64 operations and results in a full precision product that is then accumulated using 32-bit floating point addition with the other intermediate products for a 4×4×4 matrix multiply. In practice, Tensor Cores are used to perform much larger two-dimensional or higher dimensional matrix operations, built up from these smaller elements. An API, such as CUDA 9 C++ API, exposes specialized matrix load, matrix multiply and accumulate, and matrix store operations to efficiently use tensor cores from a CUDA-C++ program. At the CUDA level, the warp-level interface assumes 16×16 size matrices spanning all 32 threads of the warp.

Neural networks rely heavily on matrix math operations, and complex multilayered networks require tremendous amounts of floating-point performance and bandwidth for both efficiency and speed. In various embodiments, with thousands of processing cores, optimized for matrix math operations, and delivering tens to hundreds of TFLOPS of performance, the SMs 1110 provide a computing platform capable of delivering performance required for deep neural network-based artificial intelligence and machine learning applications.

In various embodiments, each SM 1110 may also comprise multiple special function units (SFUs) that perform special functions (e.g., attribute evaluation, reciprocal square root, and the like). In one embodiment, the SFUs may include a tree traversal unit configured to traverse a hierarchical tree data structure. In one embodiment, the SFUs may include texture unit configured to perform texture map filtering operations. In one embodiment, the texture units are configured to load texture maps (e.g., a 2D array of texels) from memory and sample the texture maps to produce sampled texture values for use in shader programs executed by the SM. In various embodiments, each SM 1110 also comprises multiple load/store units (LSUs) that implement load and store operations between the shared memory/L1 cache and register files internal to the SM 1110.

In one embodiment, each SM 1110 is configured to process one or more thread groups. As used herein, a "thread group" or "warp" refers to a group of threads concurrently executing the same program on different input data, with one thread of the group being assigned to a different execution unit within an SM 1110. A thread group may include fewer threads than the number of execution units within the SM 1110, in which case some of the execution may be idle during cycles when that thread group is being processed. A thread group may also include more threads than the number of execution units within the SM 1110, in which case processing may occur over consecutive clock cycles. Since each SM 1110 can support up to G thread groups concurrently, it follows that up to G^{∗}M thread groups can be executing in GPC 1008 at any given time.

Additionally, in one embodiment, a plurality of related thread groups may be active (in different phases of execution) at the same time within an SM 1110. This collection of thread groups is referred to herein as a "cooperative thread array" ("CTA") or "thread array." The size of a particular CTA is equal to m^{∗}k, where k is the number of concurrently executing threads in a thread group, which is typically an integer multiple of the number of execution units within the SM 1110, and m is the number of thread groups simultaneously active within the SM 1110. In some embodiments, a single SM 1110 may simultaneously support multiple CTAs, where such CTAs are at the granularity at which work is distributed to the SMs 1110.

In one embodiment, each SM 1110 contains a level one (L1) cache or uses space in a corresponding L1 cache outside of the SM 1110 to support, among other things, load and store operations performed by the execution units. Each SM 1110 also has access to level two (L2) caches (not shown) that are shared among all GPCs 1008 in PPU 1002. The L2 caches may be used to transfer data between threads. Finally, SMs 1110 also have access to off-chip "global" memory, which may include PP memory 1004 and/or system memory 904. It is to be understood that any memory external to PPU 1002 may be used as global memory. Additionally, as shown in Figure 11, a level one-point-five (L1.5) cache 1135 may be included within GPC 1008 and configured to receive and hold data requested from memory via memory interface 1014 by SM 1110. Such data may include, without limitation, instructions, uniform data, and constant data. In embodiments having multiple SMs 1110 within GPC 1008, the SMs 1110 may beneficially share common instructions and data cached in L1.5 cache 1135.

In one embodiment, each GPC 1008 may have an associated memory management unit (MMU) 1120 that is configured to map virtual addresses into physical addresses. In various embodiments, MMU 1120 may reside either within GPC 1008 or within the memory interface 1014. The MMU 1120 includes a set of page table entries (PTEs) used to map a virtual address to a physical address of a tile or memory page and optionally a cache line index. The MMU 1120 may include address translation lookaside buffers (TLB) or caches that may reside within SMs 1110, within one or more L1 caches, or within GPC 1008.

In one embodiment, in graphics and compute applications, GPC 1008 may be configured such that each SM 1110 is coupled to a texture unit 1115 for performing texture mapping operations, such as determining texture sample positions, reading texture data, and filtering texture data.

In one embodiment, each SM 1110 transmits a processed task to work distribution crossbar 1130 in order to provide the processed task to another GPC 1008 for further processing or to store the processed task in an L2 cache (not shown), parallel processing memory 1004, or system memory 904 via crossbar unit 1010. In addition, a pre-raster operations (preROP) unit 1125 is configured to receive data from SM 1110, direct data to one or more raster operations (ROP) units within partition units 1015, perform optimizations for color blending, organize pixel color data, and perform address translations.

It will be appreciated that the architecture described herein is illustrative and that variations and modifications are possible. Among other things, any number of processing units, such as SMs 1110, texture units 1115, or preROP units 1125, may be included within GPC 1008. Further, as described above in conjunction with Figure 6, PPU 1002 may include any number of GPCs 1008 that are configured to be functionally similar to one another so that execution behavior does not depend on which GPC 1008 receives a particular processing task. Further, each GPC 1008 operates independently of the other GPCs 1008 in PPU 1002 to execute tasks for one or more application programs.

In sum, a demasking engine removes masks from a pruned neural network that is represented by a graph of nodes. The demasking engine analyzes a tensor and a mask associated with a given node in the graph of nodes to determine portions of the tensor that are zeroed by the mask. The demasking engine then removes these portions from the tensor to generate a densified tensor that has a smaller dimensionality than the original tensor. A function associated with the node can be evaluated more quickly based on the densified tensor than the original tensor. The demasking engine adds a scatter operation subsequent to the node in order to scale the dimensionality of the densified tensor to the dimensionality associated with the original tensor.

At least one technological advantage of the techniques described herein is that the optimized neural network performs inference operations faster than the original pruned neural network. Accordingly, the optimized neural network is well-suited for use in real-time applications, such as autonomous vehicles. Another advantage of the techniques described herein is that the optimized neural network may have a smaller memory footprint compared to the pruned neural network, thereby conserving memory resources. These technological advantages represent multiple technological advancements relative to prior art approaches.
1. Some embodiments include a computer-implemented method comprising causing an unmasked output of a first neural network portion to be generated based, at least in part, on a masked output of the first neural network portion, wherein the unmasked output has a smaller dimensionality than the masked output, causing the unmasked output to replace the masked output, causing a scatter operation to be performed to expand the unmasked output to a dimensionality corresponding to the masked output.
2. The computer-implemented method of clause 1, wherein the unmasked output is associated with a first tensor and the masked output is associated with a second tensor.
3. The computer-implemented method of any of clauses 1-2, wherein causing the unmasked output to be generated comprises determining a first portion of the first tensor corresponding to one or more zeros included in a first mask, wherein the masked output is derived based on the first tensor and the first mask, generating the second tensor based on the first portion of the first tensor, and evaluating a first function based on the second tensor to generate the unmasked output.
4. The computer-implemented method of any of clauses 1-3, wherein the first mask zeros the first portion of the first tensor, and wherein the first function is evaluated based on the first tensor to produce a first result that is independent of the first portion of the first tensor.
5. The computer-implemented method of any of clauses 1-4, wherein the second tensor only includes a second portion of the first tensor.
6. The computer-implemented method of any of clauses 1-5, wherein a processor evaluates the first function based on the second tensor faster than the processor evaluates the first function based on the first tensor.
7. The computer-implemented method of any of clauses 1-6, wherein causing the unmasked output to replace the masked output comprises replacing the first tensor with the second tensor, wherein the second tensor has a smaller dimensionality than the first tensor.
8. The computer-implemented method of any of clauses 1-7, wherein causing the scatter operation to be performed comprises inserting one or more zeros into the unmasked output.
9. The computer-implemented method of any of clauses 1-8, further comprising combining the scatter operation with one or more additional scatter operations associated with one or more neural network layers.
10. The computer-implemented method of any of clauses 1-9, further comprising absorbing the scatter operation into a second neural network portion that resides subsequent to the first neural network portion.
11. Some embodiments include a non-transitory computer-readable medium storing program instructions that, when executed by at least one processor, cause the at least one processor to at least cause an unmasked output of a first neural network layer to be generated based, at least in part, on a masked output of the first neural network layer, wherein the unmasked output has a different dimensionality than the masked output, causing the unmasked output to replace the masked output, causing a first operation to be performed to scale the unmasked output to a dimensionality corresponding to the masked output.
12. The non-transitory computer-readable medium of clause 11, wherein the first operation comprises a first scatter operation that is performed to expand the unmasked output to the dimensionality corresponding to the masked output.
13. The non-transitory computer-readable medium of any of clauses 11-12, further comprising coalescing the first scatter operation with a second scatter operation associated with a second neural network layer that resides after to the first neural network layer in a sequence of neural network layers.
14. The non-transitory computer-readable medium of any of clauses 11-13, wherein the first operation comprises a first gather operation that is performed to reduce the unmasked output to the dimensionality corresponding to the masked output.
15. The non-transitory computer-readable medium of any of clauses 11-14, further comprising coalescing the first gather operation with a second gather operation associated with a second neural network layer that resides before the first neural network layer in a sequence of neural network layers.
16. The non-transitory computer-readable medium of any of clauses 11-15, wherein causing the unmasked output to be generated comprises determining a first portion of a first tensor that corresponds to one or more zeros included in a first mask, wherein the masked output is derived based on the first tensor and the first mask, generating a second tensor based on the first portion of the first tensor, and evaluating a first function based on the second tensor to generate the unmasked output.
17. The non-transitory computer-readable medium of any of clauses 11-16, wherein the second tensor only includes a second portion of the first tensor and does not include the first portion of the first tensor, and wherein the first function is evaluated based on the second tensor faster than the first function is evaluated based on the first tensor.
18. Some embodiments include a system, comprising a memory storing one or more instructions, and a processor that executes the instructions to at least cause an unmasked output of a first neural network layer to be generated based, at least in part, on a masked output of the first neural network layer, wherein the unmasked output has a smaller dimensionality than the masked output, cause the unmasked output to replace the masked output, and cause a scatter operation to be performed to expand the unmasked output to a dimensionality corresponding to the masked output.
19. The system of clause 18, wherein the processor further executes the instructions to combine the scatter operation with one or more scatter operations, wherein the one or more scatter operations include at least one dimension that is aligned to a corresponding dimension associated with the scatter operation.
20. The system of any of clauses 18-19, wherein the processor further executes the instructions to stack the scatter operation adjacent to one or more scatter operations, wherein the one or more scatter operations include at least one dimension that is not aligned to a corresponding dimension associated with the scatter operation.

Any and all combinations of any of the claim elements recited in any of the claims and/or any elements described in this application, in any fashion, fall within the contemplated scope of the present disclosure and protection.

The descriptions of the various embodiments have been presented for purposes of illustration, but are not intended to be exhaustive or limited to the embodiments disclosed. Many modifications and variations will be apparent to those of ordinary skill in the art without departing from the scope and spirit of the described embodiments.

Aspects of the present embodiments may be embodied as a system, method or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "module" or "system." Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine. The instructions, when executed via the processor of the computer or other programmable data processing apparatus, enable the implementation of the functions/acts specified in the flowchart and/or block diagram block or blocks. Such processors may be, without limitation, general purpose processors, special-purpose processors, application-specific processors, or field-programmable gate arrays.

The flowchart and block diagrams in the figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While the preceding is directed to embodiments of the present disclosure, other and further embodiments of the disclosure may be devised without departing from the basic scope thereof, and the scope thereof is determined by the claims that follow.

## Claims

1. A computer-implemented method comprising:
causing an unmasked output of a first neural network portion to be generated based, at least in part, on a masked output of the first neural network portion, wherein the unmasked output has a smaller dimensionality than the masked output;
causing the unmasked output to replace the masked output;
causing a scatter operation to be performed to expand the unmasked output to a dimensionality corresponding to the masked output.

2. The computer-implemented method of claim 1, wherein the unmasked output is associated with a first tensor and the masked output is associated with a second tensor.

3. The computer-implemented method of claim 2, wherein causing the unmasked output to be generated comprises:
determining a first portion of the first tensor corresponding to one or more zeros included in a first mask, wherein the masked output is derived based on the first tensor and the first mask;
generating the second tensor based on the first portion of the first tensor; and
evaluating a first function based on the second tensor to generate the unmasked output.

4. The computer-implemented method of claim 3, wherein the first mask zeros the first portion of the first tensor, and wherein the first function is evaluated based on the first tensor to produce a first result that is independent of the first portion of the first tensor.

5. The computer-implemented method of claim 3 or 4, wherein the second tensor only includes a second portion of the first tensor.

6. The computer-implemented method of any of claims 3 to 5, wherein a processor evaluates the first function based on the second tensor faster than the processor evaluates the first function based on the first tensor.

7. The computer-implemented method of any of claims 3 to 6, wherein causing the unmasked output to replace the masked output comprises replacing the first tensor with the second tensor, wherein the second tensor has a smaller dimensionality than the first tensor.

8. The computer-implemented method of any of the preceding claims, wherein causing the scatter operation to be performed comprises inserting one or more zeros into the unmasked output.

9. The computer-implemented method of any of the preceding claims, further comprising combining the scatter operation with one or more additional scatter operations associated with one or more neural network layers.

10. The computer-implemented method of any of the preceding claims, further comprising absorbing the scatter operation into a second neural network portion that resides subsequent to the first neural network portion.

11. A non-transitory computer-readable medium storing program instructions that, when executed by at least one processor, cause the at least one processor to at least:
cause an unmasked output of a first neural network layer to be generated based, at least in part, on a masked output of the first neural network layer, wherein the unmasked output has a different dimensionality than the masked output;
causing the unmasked output to replace the masked output;
causing a first operation to be performed to scale the unmasked output to a dimensionality corresponding to the masked output.

12. The non-transitory computer-readable medium of claim 11, wherein the first operation comprises a first scatter operation that is performed to expand the unmasked output to the dimensionality corresponding to the masked output.

13. The non-transitory computer-readable medium of claim 12, further comprising coalescing the first scatter operation with a second scatter operation associated with a second neural network layer that resides after to the first neural network layer in a sequence of neural network layers.

14. The non-transitory computer-readable medium of any of claims 11 to 13, wherein the first operation comprises a first gather operation that is performed to reduce the unmasked output to the dimensionality corresponding to the masked output.

15. The non-transitory computer-readable medium of claim 14, further comprising coalescing the first gather operation with a second gather operation associated with a second neural network layer that resides before the first neural network layer in a sequence of neural network layers.

16. The non-transitory computer-readable medium of any of claims 11 to 15, wherein causing the unmasked output to be generated comprises:
determining a first portion of a first tensor that corresponds to one or more zeros included in a first mask, wherein the masked output is derived based on the first tensor and the first mask;
generating a second tensor based on the first portion of the first tensor; and
evaluating a first function based on the second tensor to generate the unmasked output.

17. The non-transitory computer-readable medium of any of claims 11 to 16, wherein the second tensor only includes a second portion of the first tensor and does not include the first portion of the first tensor, and wherein the first function is evaluated based on the second tensor faster than the first function is evaluated based on the first tensor.

18. A system, comprising:
a memory storing one or more instructions; and
a processor that executes the instructions to at least:
cause an unmasked output of a first neural network layer to be generated based, at least in part, on a masked output of the first neural network layer, wherein the unmasked output has a smaller dimensionality than the masked output,
cause the unmasked output to replace the masked output, and
cause a scatter operation to be performed to expand the unmasked output to a dimensionality corresponding to the masked output.

19. The system of claim 18, wherein the processor further executes the instructions to combine the scatter operation with one or more scatter operations, wherein the one or more scatter operations include at least one dimension that is aligned to a corresponding dimension associated with the scatter operation.

20. The system of claim 18 or 19, wherein the processor further executes the instructions to stack the scatter operation adjacent to one or more scatter operations, wherein the one or more scatter operations include at least one dimension that is not aligned to a corresponding dimension associated with the scatter operation.
